# NEUE EUROPÄISCHE PATENTSCHRIFT

(11) **EP 0 968 097 B2**
(45) Veröffentlichungstag und Bekanntmachung des Hinweises auf die Entscheidung über den Einspruch: **25.05.2005**
(45) Hinweis auf die Patenterteilung: 31.07.2002
(21) Anmeldenummer: 98966211.9
(22) Anmeldetag: 15.12.1998
(51) Int. Cl.: B60J 10/00, B60J 10/06, B60R 13/06

(54) **PROFIL, INSBESONDERE DICHTUNGSPROFIL, VORZUGSWEISE FÜR DEN EINSATZ IM BEREICH VON ÖFFNUNGEN, VORZUGSWEISE IN KRAFTFAHRZEUGEN**
PROFILE, ESPECIALLY A PROFILED JOINT, PREFERABLY FOR USE IN OPENINGS, PREFERABLY IN MOTOR VEHICLES
PROFILE, NOTAMMENT PROFILE D'ETANCHEITE, S'UTILISANT DE PREFERENCE DANS DES OUVERTURES, DE PREFERENCE DANS DES VEHICULES AUTOMOBILES

(30) Priorität: 22.12.1997 DE 19757225
(43) Veröffentlichungstag der Anmeldung: 05.01.2000
(73) Patentinhaber: Henniges Elastomer- und Kunststofftechnik GmbH & Co. KG., 31457 Rehburg-Loccum (DE)
(72) Erfinder: KLEIN, Jürgen, D-31558 Hagenburg (DE); SZEB, Rudolf, D-50765 Köln (DE); SIEVERS, Werner, D-30880 Laatzen (DE)
(74) Vertreter: Jabbusch, Matthias
(86) Internationale Anmeldenummer: PCT/DE1998/003690
(87) Internationale Veröffentlichungsnummer: WO 1999/032314

(56) Entgegenhaltungen:
- EP-A- 0 479 643
- EP-A- 0 587 428
- EP-A- 0 637 604
- EP-A- 0 799 748
- EP-A- 0 863 036
- DE-A- 4 314 192
- DE-A- 19 516 839
- DE-C- 4 401 432
- JP-A- 7 246 646
- US-A- 4 381 273
- US-A- 5 143 772
- US-A- 5 411 785
- US-A- 5 489 461

## Beschreibung

Die Erfindung betrifft ein Profil gemäß dem Oberbegriff von Anspruch 1, insbesondere ein Dichtungsprofil, für den Einsatz im Bereich von Öffnungen, wie Türen und Fenster, mit einem aus Gummi gefestigten Profilgrundkorper und mit einem am Profilgrundkörper befestigten Abdeckelement, wobei das Abdeckelement aus TPE (thermoplastisches Elastomer) gefertigt ist, wie im Dokument EP 0587428 B1 offenbart.

Ein gattungsgemäßes Profil wird beispielsweise im Innenraum eines Kraftfahrzeuges im Bereich einer Türinnenverkleidung und/oder im Bereich eines Dachhimmels als Innendichtung eingesetzt. Ein derartiges Profil dient einem Abdichten, sein Abdeckelement soll einen glatten Übergang z. B. des Dachhimmels zu benachbarten Bauteilen bewirken und zugleich einen Toleranzausgleich zum Dachhimmel biloen.

Profile dieser Art sind aus der EP 0 372 745 B1, aus der EP 058 7 428 B1 und der DE 195 16 839 A1 bekannt. Diese Profile weisen jeweils Profilgrundkörper auf, die mit am Profilgrundkörper befestigten Abeckelementen versehen sind.

Durch die Verwendung im Kraftfahrzeug Volkswagen "Golf IV" bekannte Profile der eingangs genannten Gattung weisen einen Profilgrundkörper auf, an dem ein Abdeckelement befestigt ist, das als stoffkaschiertes PVC-Bauteil ausgebildet ist. Durch dieses stoffkaschierte PVC-Bauteil wird der Profilgrundkörper des bekannten Profils zumindest abschnittsweise abgedeckt. PVC ist ein Kunststoff, der eine relativ unansehliche Oberfläche aufweist. Insbesondere kann ein Kunststoffteil aus PVC in einem Kraftfahrzeug, insbesondere in einem Personenkraftfahrzeug, nicht den Eindruck einer Hochwertigkeit vermitteln. Vielmehr sieht PVC wie billiges Plastik aus, so daß es insbesondere in höherwertigen Personenkraftfahrzeugen nicht zum Einsatz gelangt. Für derartige Kraftfahrzeuge ist im Stand der Technik die Stoffkaschierung des PVC vorgesehen. Aufgrund der Stoffkaschierung wird zwar ein höherwertiges Aussehen des Abdeckelementes erreicht, jedoch erhöhen sich aufgrund dieser vorzusehenden Stoffkaschierung die Herstellungskosten des Abdeckelementes und somit des Profils insgesamt erheblich.

Der Erfindung liegt die Aufgabe zugrunde, ein Profil der eingangs genannten Gattung aufzuzeigen, dessen Herstellung gegenüber den Herstellungen bekannter Profile kostengünstiger ist und das insbesondere für den Einsatz in Kraftfahrzeugen geeignete Eigenschaften aufweist.

Diese Aufgabe ist erfindungsgemäß dadurch gelost, daß das Abdeckelement des Profils wenigstens zweilagig ausgebildet ist, wobei eine dem Profilgrundkörper zugekehrte Lage aus ungeschäumtem TPE gefertigt ist und wobei eine dem Profilgrundkörper abgekehrte Lage aus, vorzugsweise mit Wasser, geschäumtem TPE gefertigt ist.

Bei TPE handelt es sich um einen Kunststoff, dessen Oberfläche ein hochwertiges Aussehen aufweist. Aufgrund dieses hochwertigen Aussehens kann TPE als Abdeckelement auch in höherwertigen Kraftfahrzeugen eingesetzt werden. Vorteilhaft kann dabei auf eine Kaschierung mit einem Stoff oder dergleichen verzichtet werden, so daß sich die Herstellungskosten des Abdeckelementes und somit des Profils insgesamt vorteilhaft minimieren. Die Fertigung des Abdeckelementes aus TPE hat den weiteren Vorteil, daß es sich mit dem TPE um ein einfach recycelbares Material handelt. So kann insbesondere bei der Herstellung des Abdeckelementes entstehender Überschuß an TPE dem Verarbeitungsprozeß wieder zugeführt werden.

Bei dem erfindungsgemäßen Profil ist das Abdeckelement somit mehrlagig, vorzugsweise zweilagig, ausgebildet und haben die beiden TPE-Lagen unterschiedliche Zustände. Eine z. B. untere, dem Profilgrundkörper zugekehrte Lage ist aus ungeschäumtem TPE ausgebildet. Diese untere ungeschäumte Lage TPE ist auf vorteilhafte Weise dauerhaft mit dem Profilgrundkörper aus Gummi verbunden, da eine Verbindung zwischen Gummi und ungeschäumtem TPE sehr fest aüsbildbar ist. Insbesondere ist diese Verbindung fester als eine Verbindung von Gummi und geschäumtem TPE ausbildbar. Eine z. B. obere, dem Profilgrundkörper abgekehrte Lage des Abdeckelementes ist dagegen aus geschäumtem TPE ausgebildet, das eine besondere Oberflächenstruktur aufweist.

Durch die Verwendung von geschäumtem TPE ist auf vorteilhafte Weise eine markante Oberflächenstruktur der oberen Lage des Abdeckelementes ausbildbar. Geschäumtes TPE hat eine Oberflächenstruktur, die der Oberflächenstruktur von gegerbtem Leder nahekommt. Aus diesem Grund ist das erfindungsgemäße Profil als Dichtungsprofil auch in hochwertigen Personenkraftfahrzeugen einsetzbar, ohne daß eine Stoffkaschierung vorzusehen ist. Vorzugsweise ist das TPE mit Wasser geschäumt, wobei durch eine Änderung der Wasserzugabe während des Herstellungsprozesses auf einfache und kostengünstige Weise die Oberflächenstruktur des Abdeckelementes an die gewünschte Ausbildung anpaßbar ist. Die Schäumung des TPE mit Wasser ist zudem umweltschonend.

Durch den Einsatz eines mehrlagigen Abdekkelementes aus TPE ist somit einerseits eine feste Verbindung zwischen dem Abdeckelement und dem Profilgrundkörper gewährleistet und andererseits eine Abdeckung des Profilgrundkörpers mit einem Abdeckelement mit den bevorzugten Oberflächeneigenschaften erreicht. Zudem erhöht sich durch die mehrlagige Ausbildung des Abdeckelementes dessen Falten- und Knickfreiheit insbesondere bei einer Biegebeanspruchung. Das Radienverhalten ist verbessert. Das wenigstens zweilagig ausgebildete Abdeckelement wird vorzugsweise in einem gemeinsamen Extrudiervorgang hergestellt.

Der Profilgrundkörper des erfindungsgemäßen Profils ist aus Gummi gefertigt. Gummi ist ein elastisches Material, so daß es für den Einsatz als Dichtungsprofil in bekannter Weise gut geeignet ist.

Zum Befestigen des Abdeckelementes an dem Profilgrundkörper kann vorgesehen sein, daß das Abdeckelement an dem Profilgrundkörper festgeklebt ist. Dadurch ist eine dauerhafte Verbindung dieser beiden Bauteile des Profils erreichbar. In bevorzugter Ausführung ist jedoch vorgesehen, daß das Abdeckelement an dem Profilgrundkörper festgeschweißt ist. Bei dieser bevorzugten Befestigungsweise ist eine feste Verbindung der beiden Bauteile des Profils in unmittelbarer gegenseitiger Anlage erreicht, die Verwendung eines zusätzlichen Klebers ist nicht erforderlich.

Das Abdeckelement ist vorzugsweise, insbesondere für den Einsatz des Profils im Inneren eines Personenkraftfahrzeuges, als Abdecklippe ausgebildet. Eine Abdecklippe kann einen weiten Bereich des Profilgrundkörpers abdecken, so daß dieser Profilgrundkörper aus Gummi aus dem Innenraum des Personenkraftfahrzeuges nicht sichtbar ist. Zudem kann die Abdecklippe den gewünschten glatten Übergang zwischen dem Profilgrundkörper und dem Dachhimmel des Personenkraftfahrzeuges bewirken, indem sich ein auslaufendes Ende der Abdecklippe insbesondere in einem spitzen Winkel an den Dachhimmel anlegt.

In bevorzugter Ausführung ist schließlich vorgesehen, daß die Abdecklippe eine Färbung aufweist. Durch ein Färben der Abdecklippe ist diese und somit der vom Personenkraftfahrzeug-Innenraum sichtbare Teil des Profils vorteilhaft an die Innenausstattung des Personenkraftfahrzeuges anpaßbar. Insbesondere kann die Abdecklippe eine Färbung aufweisen, die beispielsweise der Färbung der Sitze oder der Türinnenverkleidung oder des Dachhimmels des Personenkraftfahrzeuges entspricht.

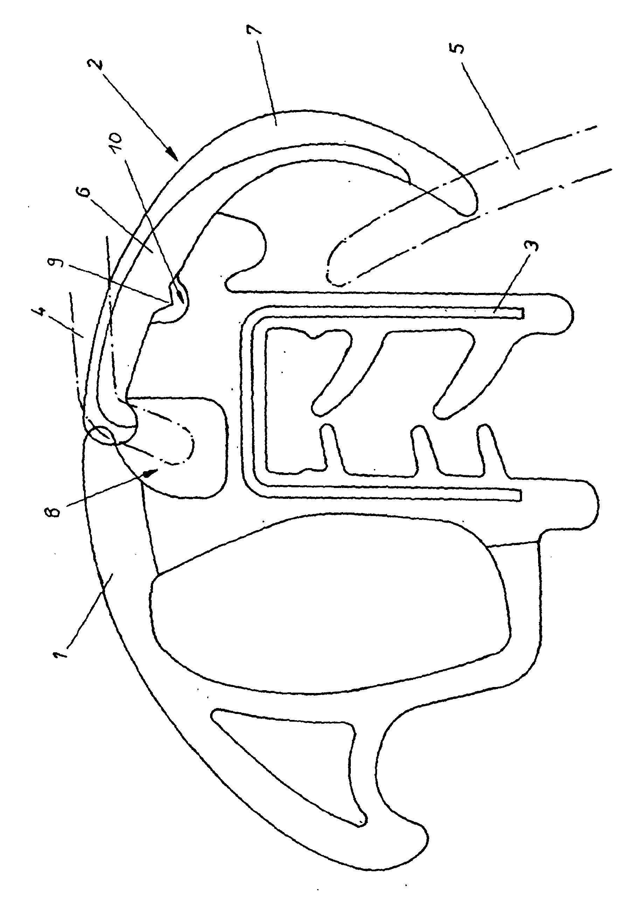

Ein Ausführungsbeispiel der Erfindung, aus dem sich weitere erfinderische Merkmale ergeben, ist in der Zeichnung dargestellt. Die Zeichnung zeigt einen Querschnitt eines erfindungsgemäßen Profils, insbesondere eines erfindungsgemäßen Dichtungsprofils.

Das dargestellte Profil, insbesondere Dichtungsprofil, weist einen Profilgrundkörper 1 und ein am Profilgrundkörper 1 befestigtes Abdeckelement 2 auf. Der Profilgrundkörper 1 ist als Steckfuß ausgebildet, er ist aus Gummi gefertigt. Zur Stabilisierung des Profilgrundkörpers 1 ist in diesen eine als U-Profil ausgebildete Stahleinlage 3 eingesetzt.

Das in der Zeichnung dargestellte Profil dient als Dichtungsprofil zwischen einer mit strichpunktierten Linien angedeuteten, abgebrochen dargestellten Türinnenverkleidung 4 und einem in gleicher Weise dargestellten Dachhimmel 5 eines Personenkraftfahrzeuges. Im in der Zeichnung dargestellten oberen Bereich weist der Profilgrundkörper 1 eine Einstecktasche 8 für das freie Ende der Türinnenverkleidung 4 auf. In die Einstecktasche 8 ist die Türinnenverkleidung 4 in den Profilgrundkörper 1 eingesteckt. Im in der Zeichnung dargestellten rechten Bereich des Profilgrundkörpers 1 ist das freie Ende des Dachhimmels 5 von außen gegen einen Abschnitt des Profilgrundkörpers 1 geführt. Der räumliche Abschnitt zwischen der Türinnenverkleidung 4 und dem Dachhimmel 5 ist dabei von dem Abdeckelement 2 des Profils überdeckt, wobei zugleich durch das Aboeckelement 2 der Profilgrundkörper 1 abgedeckt ist. Zu diesem Zweck ist das Abdeckelement 2 als Abdekklippe ausgebildet, es weist im Schnitt eine etwa parabelförmig gebogene Ausbildung auf. Das dem Dachhimmel 5 zugekehrte freie Ende des Abdeckelementes 2 überdeckt das freie Ende des Dachhimmels 5.

Das Abdeckelement 2 des erfindungsgemäßen Profils ist aus TPE (thermoplastisches Elastomer) gefertigt. Das Abdeckelement 2 aus TPE ist in weiten Bereichen seiner parabelförmigen Biegung zweilagig ausgebildet. Dabei ist die dem Profilgrundkörper 1 zugekehrte Lage 6 aus ungeschäumtem TPE gefertigt und die dem Profilgrundkörper 1 abgekehrte Lage 7 aus mit Wasser geschäumtem TPE gefertigt. Die Lage 6 aus dem ungeschäumten TPE ist mit dem Profilgrundkörper 1 aus Gummi fest verbunden. Die feste Verbindung ist durch eine direkte Verschweißung von Profilgrundkörper 1 und Lage 6 des Abdeckelementes 2 hergestellt. Von der Lage 6 steht ein Vorsprung 9 in eine zugeordnete Vertiefung 10 im Profilgrundkörper 1 vor. Vorsprung 9 und Vertiefung 10 dienen als Anlagehilfen und -kontrolle für eine lagerichtige Zuordnung des Abdekkelementes 2 und des Profilgrundkörpers 1 vor Festlegen dieser Bestandteile durch das Verschweißen.

Die Lage 7, die dem Profilgrundkörper 1 abgekehrt ist, jedoch dem Innenraum eines Kraftfahrzeuges zugekehrt ist, weist aufgrund ihrer Fertigung aus geschäumtem TPE eine strukturierte Oberfläche auf, die einen hochwertigen Eindruck vermittelt. Die Lage 7 aus dem geschäumten TPE kann direkt in den Innenraum des Personenkraftfahrzeuges zeigen, insbesondere muß sie nicht mit einer Stoffkaschierung oder dergleichen versehen werden, um sie an die benachbarten Türverkleidung und Dachhimmel anzupassen. Die Lage 7 aus dem geschäumtem TPE kann jedoch eine diesen Bauteilen entsprechende Färbung aufweisen.

## Patentansprüche

1. Profil, insbesondere Dichtungsprofil, für den Einsatz im Bereich von Öffnungen, wie Türen und Fenster, mit einem aus Gummi gefertigten Profilgrundkörper (1) und mit einem am Profilgrundkörper (1) befestigten Abdeckelement (2), wobei das Abdeckelement (2) aus thermoplastischem Elastomer, TPE, gefertigt ist.
**dadurch gekennzeichnet,**
**daß** das Abdeckelement (2) wenigstens zweilagig ausgebildet ist, wobei eine dem Profilgrundkörper (1) zugekehrte Lage (6) aus ungeschäumtem TPE gefertigt ist und wobei eine dem Profilgrundkörper (1) abgekehrte Lage (7) aus geschäumtem TPE gefertigt ist.

2. Profil nach Anspruch 1, **dadurch gekennzeichnet, daß** das Abdeckelement (2) an dem Profilgrundkörper (1) festgeklebt ist.

3. Profil nach Anspruch1, **dadurch gekennzeichnet, daß** das Abdeckelement (2) an dem Profilgrundkörper (1) festgeschweißt ist.

4. Profil nach einem der vorhergehenden Ansprüche, **dadurch gekennzeichnet, daß** das Abdeckelement (2) als Abdecklippe ausgebildet ist.

5. Profil nach Anspruch 4, **dadurch gekennzeichnet, daß** die Abdecklippe eine Färbung aufweist.

## Claims

1. A profile, in particular a profiled joint, for use in the vicinity of openings such as doors and windows, having a main body (1) made of rubber and having a covering element (2) secured to the main body (1) of the profile, wherein the covering element (2) is produced from thermoplastic elastomer, TPE, **characterised in that** the covering element (2) is constructed in at least two layers, wherein one layer (6) facing the main body (1) of the profile is produced from non-foamed TPE and wherein one layer (7) remote from the main body (1) of the profile is produced from foamed TPE.

2. The profile according to claim 1, **characterised in that** the covering element (2) is secured to the main body (1) of the profile by adhesion.

3. The profile according to claim 1, **characterised in that** the covering element (2) is secured to the main body (1) of the profile by welding.

4. The profile according to one of the preceding claims, **characterised in that** the covering element (2) is designed in the form of a covering lip.

5. The profile according to claim 4, **characterised in that** the covering lip has a colouring.

## Revendications

1. Profilé, notamment profilé d'étanchéité, destiné à être utilisé dans la zone d'ouvertures, comme des portes ou des fenêtres, comportant un corps de base du profilé (1) fabriqué en caoutchouc et un élément de couverture (2) fixé au corps de base du profilé (1), l'élément de couverture (2) étant fabriqué dans un élastomère thermoplastique TPE,
**caractérisé en ce que** l'élément de couverture (2) est conçu au moins en deux couches, une couche (6) dirigée vers le corps de base du profilé (1) étant fabriquée en TPE non expansé et une couche (7) tournée à l'opposée du corps de base du profilé (1) étant fabriquée en TPE expansé.

2. Profilé selon la revendication 1, **caractérisé en ce que** l'élément de couverture (2) est fixé par collage sur le corps de base du profilé (2).

3. Profilé selon la revendication 1, **caractérisé en ce que** l'élément de couverture (2) est fixé par soudage sur le corps de base du profilé (1).

4. Profilé selon l'une quelconque des revendications précédentes, **caractérisé en ce que** l'élément de couverture (2) est conçu sous la forme d'une lèvre de couverture.

5. Profilé selon la revendication 4, **caractérisé en ce que** la lèvre de couverture est teintée.
